(19) Europäisches Patentamt
European Patent Office
Office européen des brevets

(11) **EP 4 203 097 A1**

(12) **EUROPEAN PATENT APPLICATION**
published in accordance with Art. 153(4) EPC

(43) Date of publication:
**28.06.2023 Bulletin 2023/26**

(21) Application number: **20950862.1**

(22) Date of filing: **31.08.2020**

(51) International Patent Classification (IPC):
**H01M 4/139** (2010.01)

(52) Cooperative Patent Classification (CPC):
**Y02E 60/10**

(86) International application number:
**PCT/CN2020/112469**

(87) International publication number:
**WO 2022/041193 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• ZHU, Shan
  Ningde, Fujian 352100 (CN)
• GUAN, Ting
  Ningde, Fujian 352100 (CN)
• WU, Fei
  Ningde, Fujian 352100 (CN)

(74) Representative: **Icosa**
**83 avenue Denfert-Rochereau**
**75014 Paris (FR)**

(54) **ELECTRODE PLATE, ELECTROCHEMICAL DEVICE, AND ELECTRONIC DEVICE**

(57) This application provides an electrode plate, an electrochemical device, and an electronic device. The electrode plate includes: a current collector; a first coating, applied onto the current collector, where the first coating includes an active material, and the first coating includes a first edge part, a middle part, and a second edge part sequentially in a width direction of the current collector; and a second coating, including a first part disposed on the first edge part and a second part disposed on the second edge part. A first bonding force is exerted by a surface that is of the first part and that is away from the first edge part. A second bonding force is exerted by a surface that is of the second part and that is away from the second edge part. A third bonding force is exerted by a surface that is of the middle part and that is away from the current collector. Both the first bonding force and the second bonding force are greater than the third bonding force. The embodiments of this application enhance electrical performance and safety performance of the electrochemical device while minimizing the impact on a volumetric energy density of the electrochemical device.

FIG. 1

**Description**

**TECHNICAL FIELD**

This application relates to the technical field of electronics, and in particular, to an electrode plate, an electrochemical device, and an electronic device.

**BACKGROUND**

Currently, to ensure the processability and safety performance of an electrode plate, an active material layer or current collector of the electrode plate may be fully overlaid with a high-adhesion coating, but at the cost of impairing a volumetric energy density of the electrochemical device (such as a lithium-ion battery). How to enhance electrical performance of the electrochemical device while ensuring the volumetric energy density is a problem to be solved.

**SUMMARY**

In some embodiments of this application, a high-adhesion coating is applied in a specific region to enhance electrical performance and safety performance of an electrochemical device while minimizing the impact on a volumetric energy density of the electrochemical device.

An embodiment of this application provides an electrode plate. The electrode plate includes: a current collector; a first coating, applied onto the current collector, where the first coating includes an active material, and the first coating includes a first edge part, a middle part, and a second edge part sequentially in a width direction of the current collector; and a second coating, including a first part disposed on the first edge part and a second part disposed on the second edge part. A first bonding force is exerted by a surface that is of the first part and that is away from the first edge part. A second bonding force is exerted by a surface that is of the second part and that is away from the second edge part. A third bonding force is exerted by a surface that is of the middle part and that is away from the current collector. Both the first bonding force and the second bonding force are greater than the third bonding force.

In some embodiments, the first part possesses a width di, the second part possesses a width $d_2$, the first coating possesses a width D, and the widths satisfy $1\% \leq d_1/D \leq 10\%$ and $1\% \leq d_2/D \leq 10\%$.

In some embodiments, both the first bonding force and the second bonding force are 2 to 10 times the third bonding force; and/or both the first bonding force and the second bonding force are greater than 5 N/m.

In some embodiments, a thickness of the second coating is h, a thickness of the middle part is H, and the thicknesses satisfy $0.5\ \mu m < h < 8\ \mu m$ and $20\ \mu m < H < 200\ \mu m$.

In some embodiments, the first coating includes a first binder, a mass percent of the first binder is 0.5% to 6%, and the first binder includes at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

In some embodiments, the second coating includes a second binder, a mass percent of the second binder is 30% to 80%, and the second binder includes at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

In some embodiments, in a length direction of the first coating, the first part and/or the second part are applied discontinuously, a ratio of an aggregate coating length of the first part to a length of the first coating is greater than 80%, and a ratio of an aggregate coating length of the second part to the length of the first coating is greater than 80%.

In some embodiments, at least a partial region of the current collector is etched.

In some embodiments, regions of the current collector that correspond to the first edge part and the second edge part are etched, and a roughness of the regions of the current collector that correspond to the first edge part and the second edge part is 2 to 4 times a roughness of a region of the current collector that corresponds to the middle part.

Another embodiment of this application provides an electrochemical device, including: a positive electrode plate; a negative electrode plate; and a separator disposed between the positive electrode plate and the negative electrode plate. The positive electrode plate and/or the negative electrode plate is any one of the electrode plates described above.

An embodiment of this application further provides an electronic device, including the electrochemical device.

In some embodiments of this application, a coating of a bonding force different from the bonding force of the active material layer is applied onto the edge region of the active material layer, so that the bonding force between the coating and the separator is greater than the bonding force between the active material layer and the separator, thereby reducing the impact caused by a slitter onto the electrode plate (for example, burrs or chips generated) during slitting of the electrode plate. In addition, the coating disposed on the edge region of the active material can improve the bonding force between the edge region of the electrode plate and the separator, and in turn, the impact caused by film detachment of the electrode plate onto the electrode assembly is reduced on the part of the electrode assembly, thereby improving the electrical performance and safety performance of the electrochemical device. At the same time, the coating is applied onto just the edge regions of the active material layer, thereby minimizing the impact on the volumetric energy density of the electrochemical device.

**BRIEF DESCRIPTION OF DRAWINGS**

FIG. 1 is a front view of an electrode plate according to an embodiment of this application;
FIG. 2 is a top view of a first coating (continuously applied) and a current collector according to an embodiment of this application;
FIG. 3 is a top view of a first coating (discontinuously applied) and a current collector according to another embodiment of this application; and
FIG. 4 is a front view of an electrode assembly of an electrochemical device according to an embodiment of this application.

**DETAILED DESCRIPTION OF EMBODIMENTS**

The following embodiments enable a person skilled in the art to understand this application more comprehensively, but without limiting this application in any way.

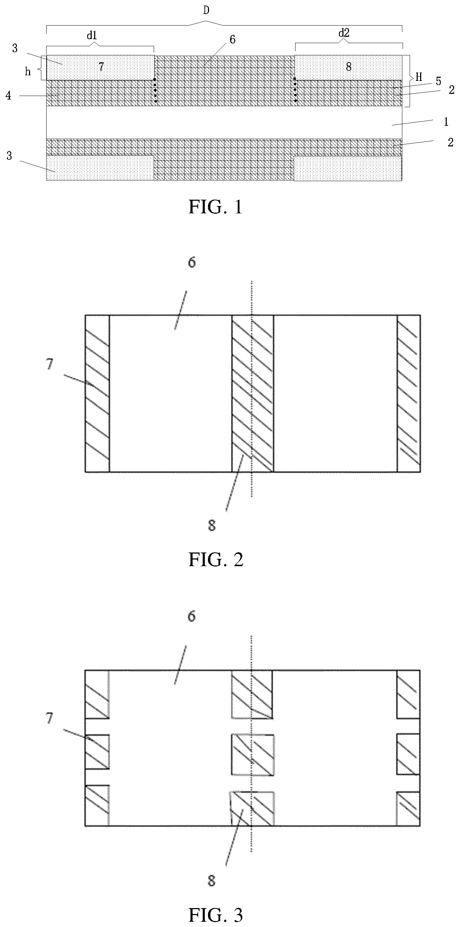

As shown in FIG. 1, which is a front view (sectional view) of an electrode plate according to an embodiment of this application, the electrode plate may include a current collector 1 and a first coating 2 applied onto the current collector 1. In some embodiments, the first coating 2 includes an active material. In some embodiments, the first coating 2 includes a first edge part 4, a middle part 6, and a second edge part 5 sequentially in a width direction of the current collector 1. The middle part 6 is located between the first edge part 4 and the second edge part 5. Understandably, although the first edge part 4, the second edge part 5, and the middle part 6 are separated by dotted lines in FIG. 1, the boundary at the dotted line does not necessarily exist in reality. In some embodiments, the electrode plate further includes a second coating 3. The second coating 3 may include a first part 7 disposed on the first edge part 4 and a second part 8 disposed on the second edge part 5. In some embodiments, the first part 7 and the second part 8 may be identical or different in material, width, thickness, and the like.

In some embodiments, a first bonding force may be exerted by a region that is of the first part 7 and that is away from the first edge part, that is, a first bonding force may be exerted between the first part 7 and the separator. A second bonding force may be exerted by a surface that is of the second part 8 and that is away from the second edge part, that is, a second bonding force may be exerted between the second part 8 and the separator. A third bonding force may be exerted by a surface that is of the middle part 6 and that is away from the current collector, that is, a third bonding force may be exerted between the middle part 6 and the separator. Both the first bonding force and the second bonding force are greater than the third bonding force. In this embodiment of this application, the first part 7 and the second part 8 of the second coating 3 are disposed on the first edge part 4 and the second edge part 5 of the first coating 2 respectively, thereby reducing the impact caused by a slitter onto the electrode plate (for example, burrs or chips generated) during slitting of the electrode plate. In addition, because both the first bonding force and the second bonding force are greater than the third bonding force, the bonding force between the edge region of the electrode plate and the separator can be improved, and in turn, the impact caused by film detachment of the electrode plate onto the electrode assembly is reduced on the part of the electrode assembly, thereby improving the electrical performance and safety performance of the electrochemical device. At the same time, the second coating 3 is applied onto just the edge regions of the first coating 2, thereby minimizing the impact on the volumetric energy density of the electrochemical device.

In some embodiments, the first part 7 possesses a width di, the second part 8 possesses a width $d_2$, the first coating 2 possesses a width D, and the widths satisfy $1\% \leq d_1/D \leq 10\%$ and $1\% \leq d_2/D \leq 10\%$. If the width of the first part 7 or the second part 8 is deficient, for example, less than 1% of the width of the first coating 2, the effect of the second coating 3 on improving the force of binding to the separator is limited. If the width of the first part 7 or the second part 8 is excessive, for example greater than 10% of the width of the first coating 2, the volumetric energy density of the electrochemical device is adversely affected.

In some embodiments, both the first bonding force and the second bonding force are 2 to 10 times the third bonding force. In some embodiments, both the first bonding force and the second bonding force are greater than 5 N/m. In this way, a strong bonding force between the second coating 3 and the separator is ensured effectively.

In some embodiments, a thickness of the second coating 3 is h, a thickness of the middle part of the first coating 2 is H, and the thicknesses satisfy $0.5\ \mu m < h < 8\ \mu m$ and $20\ \mu m < H < 200\ \mu m$. In some embodiments, the thickness H of the middle part of the second coating may be equal to a sum of the thicknesses of the first edge part 4 and the first part 7, or may be equal to a sum of the thicknesses of the second edge part 5 and the second part 8. If the thickness of the second coating 3 is deficient, for example, less than 0.5 $\mu$m, a bonding force strong enough between the second coating 3 and the separator is not ensured. If the thickness of the second coating is excessive, the volumetric energy density of the electrochemical device is adversely affected. If the thickness of the first coating 2 is deficient, the amount of active material per unit area will be deficient, thereby affecting the volumetric energy density of the electrochemical device. If the thickness of the first coating 2 is excessive, the transfer path of intercalation and deintercalation of lithium ions close to the first coating 2 of the current collector is prolonged, thereby impairing the efficiency of intercalation and deintercalation of the lithium ions.

In some embodiments, the first coating 2 further includes a first binder. In some embodiments, the first binder includes at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, a mass percent of the first binder in the first coating 2 is 0.5% to 6%. If the mass percent of the first binder is deficient, the binding force of the material of the first coating 2 is not strong enough, thereby adversely affecting the binding between the first coating 2 and the current collector or between the first coating 2 and the separator. If the mass percent of the first binder is excessive, the volumetric energy density of the electrochemical device is adversely affected.

In some embodiments, the second coating 3 includes a second binder. In some embodiments, the second binder includes at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, a mass percent of the second binder in the second coating 3 is 30% to 80%. If the mass percent of the second binder is deficient, a bonding force strong enough between the second coating 2 and the separator is not ensured. If the mass percent of the second binder is excessive, the conductivity of the second coating 3 is deficient.

In some embodiments, the second coating 3 further includes a conductive agent. In some embodiments, the conductive agent in the second coating 3 may include at least one of conductive carbon black, carbon nanotubes, conductive graphite, graphene, acetylene black, or carbon nanofibers. In some embodiments, a mass percent of the conductive agent in the second coating 3 is 20% to 70%. If the mass percent of the conductive agent in the second coating 3 is deficient, the conductivity of the second coating 3 is adversely affected. If the mass percent of the conductive agent in the second coating 3 is excessive, the mass percent of the second binder is not enough, thereby impairing the bonding performance of the second coating 3. In some embodiments, the second coating 3 further includes ceramic particles.

Understandably, although the first coating 2 and the second coating 3 are formed on both sides of the current collector 1 shown in FIG. 1, this is merely illustrative. The first coating 2 and the second coating 3 may be formed on a single side of the current collector 1 instead.

As shown in FIG. 2, which is a top view of a second coating (continuously applied) and a first coating according to an embodiment of this application, For brevity, only the middle part 6 of the first coating 2 as well as the first part 7 and the second part 8 of the second coating 3 are shown. The dotted line in FIG. 2 shows a slitting position of the electrode plate. By disposing the second coating 3 on the edge part of the first coating 2, the impact of the stress can be reduced during slitting, and the burrs generated on the current collector during slitting can be reduced. In addition, the bonding performance between the electrode plate and the separator can be improved. In some embodiments, the first part 7 and/or the second part 8 may be continuously applied in the length direction of the first coating 2.

As shown in FIG. 3, in some embodiments, in the length direction of the first coating 2, the first part 7 and/or the second part 8 may be applied discontinuously, a ratio of an aggregate coating length of the first part 7 to a length of the first coating 2 is greater than 80%, and a ratio of an aggregate coating length of the second part 8 to the length of the first coating 2 is greater than 80%. The discontinuous coating method further reduces the impact on the volumetric energy density of the electrochemical device. In addition, if the coating length of the first part 7 and/or the second part 8 is deficient, the exertion of the bonding performance of the second coating 3 is affected adversely.

In some embodiments, at least a partial region or the whole region of the current collector 1 is etched. By etching the current collector 1, the roughness of the current collector 1 is increased properly, thereby increasing the bonding force between the current collector 1 and the first coating 2. In some embodiments, regions of the current collector 1 that correspond to the first edge part 4 and the second edge part 5 are etched. A roughness of the regions of the current collector 1 that correspond to the first edge part 4 and the second edge part 5 is 2 to 4 times a roughness of a region of the current collector 1 that corresponds to the middle part 6. The etching of the first edge part 4 and the second edge part 5 further enhances the bonding force between the current collector 1 and the first coating 2, and also enhances the bonding force between the edge region of the entire electrode plate and the separator. In some embodiments, the etching is primarily performed in a brown oxidation or black oxidation manner, and may be performed in any other manner as appropriate. In some embodiments, the roughness of an etched region of the current collector 1 is 2 to 4 times the roughness of an unetched region. In some embodiments, the roughness of the unetched region is less than 2 $\mu$m.

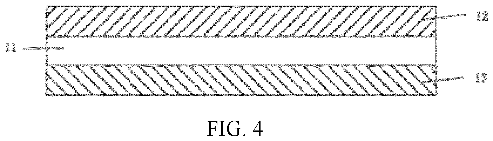

Understandably, the electrode plate in this application may be a positive electrode plate or a negative electrode plate. As shown in FIG. 4, an embodiment of this application further provides an electrochemical device. The electrochemical device includes a separator 11, a positive electrode plate 12, and a negative electrode plate 13. The separator 11 is disposed between the positive electrode plate 12 and the negative electrode plate 13. The positive electrode plate 12 and/or the negative electrode plate 13 is the electrode plate of the structure described above.

In some embodiments, a positive current collector of the positive electrode plate 12 may be an aluminum (Al) foil, or may be another type of positive current collector commonly used in the art. In some embodiments, a thickness of the positive current collector may be 1 $\mu$m to 200 $\mu$m.

In some embodiments, when the electrode plate is the positive electrode plate 12, the active material of the first coating 2 may include at least one of lithium cobalt oxide, lithium manganese oxide, lithium iron phosphate, lithium nickel cobalt manganese oxide, lithium nickel cobalt aluminum oxide, or lithium nickel manganese oxide. In some embodiments, the first coating 2 further includes a conductive agent. In some embodiments, the conductive agent in the first coating 2 may include at least one of conductive carbon black, Ketjen black, graphite sheets, graphene, carbon nanotubes, or carbon fibers. In some embodiments, a mass ratio between the positive active material, the conductive agent, and the binder in the first coating 2 may be (91 to 99): (0.5 to 3): (0.5 to 6). Understandably, the above parameters are merely examples, and the positive active material layer may adopt any other material, thickness, and mass ratio as appropriate.

In some embodiments, the negative current collector of the negative electrode plate 13 may be at least one of a copper foil, a nickel foil, or a carbon-based current collector, or may be any other negative current collector commonly used in the art. In some embodiments, a thickness of the negative current collector may be 1 $\mu$m to 200 $\mu$m.

In some embodiments, when the electrode plate is the negative electrode plate 13, the active material of the first coating 2 may include at least one of artificial graphite, natural graphite, hard carbon, mesocarbon microbeads, a silicon alloy, a tin alloy, or pure silicon. In some embodiments, the first coating 2 may further include a conductive agent. The conductive agent in the first coating 2 may include at least one of conductive carbon black, Ketjen black, graphite sheets, graphene, carbon nanotubes, or carbon fibers. Understandably, the materials described above are merely examples, and the first coating 2 serving as a negative active material layer may be any other material as appropriate. In some embodiments, a mass ratio between the negative active material, the conductive agent, and the binder in the first coating 2 may be (91 to 99): (0 to 3): (1 to 6). Understandably, what is enumerated above is merely an example, and any other mass ratio may apply as appropriate.

In some embodiments, the separator 11 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator falls within a range of approximately 5 $\mu$m to 20 $\mu$m.

In some embodiments, a surface of the separator may further include a porous layer. The porous layer is disposed on at least one surface of the separator. The porous layer includes inorganic particles and a binder. The inorganic particles are at least one selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. In some embodiments, a diameter of a pore of the separator falls within a range of approximately 0.01 $\mu$m to 1 $\mu$m. The binder in the porous layer is at least one selected from polyvinylidene difluoride, a vinylidene difluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrode assembly of the electrochemical device is a jelly-roll electrode assembly or a stacked electrode assembly.

In some embodiments of this application, the electrochemical device includes, but is not limited to, a lithium-ion battery. In some embodiments, the electrochemical device may further include an electrolyte. The electrolyte may be one or more of a gel electrolyte, a solid-state electrolyte, or an electrolytic solution. The electrolytic solution includes a lithium salt and a nonaqueous solvent. The lithium salt is one or more selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, the lithium salt is $LiPF_6$ because it provides a high ionic conductivity and improves cycle characteristics.

The nonaqueous solvent may be selected from a carbonate compound, a carboxylate compound, an ether compound, another organic solvent, or any combination thereof.

The carbonate compound may be selected from a chain carbonate compound, a cyclic carbonate compound, a fluorocarbonate compound, or any combination thereof.

The chain carbonate compound may be selected from diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. The cyclic carbonate compound may be selected from ethylene carbonate (EC), propylene carbonate (PC), butylene carbonate (BC), vinyl ethylene carbonate (VEC), or any combination thereof. The fluorocarbonate compound may be selected from fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

The carboxylate compound may be selected from methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

The ether compound may be selected from dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

The other organic solvent may be selected from dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments of this application, using a lithium-ion battery as an example, the lithium-ion battery is prepared by: winding or stacking the positive electrode plate, the separator, and the negative electrode plate sequentially into an electrode assembly, putting the electrode assembly into a package such as an aluminum plastic film ready for sealing, injecting an electrolytic solution, and performing chemical formation and sealing. Subsequently, a performance test is performed on the prepared lithium-ion battery.

A person skilled in the art understands that the method for preparing the electrochemical device (for example, the lithium-ion battery) described above is merely an example. To the extent not departing from the content disclosed herein, other methods commonly used in the art may be employed.

An embodiment of this application further provides an electronic device containing the electrochemical device. The electronic device according to this embodiment of this application is not particularly limited, and may be any electronic device known in the prior art. In some embodiments, the electronic device may include, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Some specific embodiments and comparative embodiments are enumerated below to give a clearer description of this application, using a lithium-ion battery as an example.

**Embodiment 1**

Preparing a positive electrode plate: Dissolving lithium cobalt oxide as a positive active material, conductive carbon black as a conductive agent, and polyvinylidene difluoride (PVDF) as a binder at a mass ratio of 97.6: 1.1: 1.3 in an N-methyl-pyrrolidone (NMP) solution to form a positive slurry. Using an aluminum foil as a positive current collector, coating the positive current collector with the positive slurry by a thickness of 50 μm, and performing steps of drying, cold pressing, and slitting to obtain a positive electrode plate.

Preparing a negative electrode plate: Dissolving artificial graphite as a negative active material and styrene-butadiene rubber as a binder at a mass ratio of 98: 2 in deionized water to form a first coating slurry. Using a 10-μm thick and 80-mm wide copper foil as a negative current collector, coating the negative current collector with the first coating slurry by a thickness of 60 μm, and drying the slurry to obtain a first coating.

Dissolving the polyvinylidene fluoride as a first binder and conductive carbon black as a first conductive agent at a mass ratio of 60: 40 in an N-methylpyrrolidone (NMP) solution to form a second coating slurry. Applying the second coating slurry onto two edge parts of the first coating by a width of 5 mm and a thickness of 2 μm, and performing drying, cold pressing, and slitting to obtain a negative electrode plate.

Preparing a separator: Using 8 μm-thick polyethylene (PE) as a substrate of the separator, coating both sides of the substrate of the separator with a 2-μm thick aluminum oxide ceramic layer. Finally, applying polyvinylidene fluoride (PVDF) as a binder by an amount of 2.5 mg onto both sides that have been coated with a ceramic layer, and performing drying.

Preparing an electrolytic solution: In an environment with a water content of less than 10 ppm, mixing lithium hexafluorophosphate with a nonaqueous organic solvent (in which a mass ratio between the ingredients is ethylene carbonate (EC): dimethyl carbonate (DMC) = 40: 60) at a mass ratio of 8: 92 to form an electrolytic solution.

Preparing a lithium-ion battery: Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum plastic film that serves as an outer package, dehydrating the electrode assembly at 80 °C, injecting the electrolytic solution and sealing the package, and performing steps such as chemical formation, degassing, and edge trimming to obtain a lithium-ion battery.

The preparation method in other embodiments and comparative embodiments is the same as that in Embodiment 1 except that some parameter values are changed. In Comparative Embodiment 1, an undercoat is formed first on the negative current collector by a thickness of 2 $\mu$m. The material of the undercoat includes polyvinylidene fluoride and conductive carbon black mixed at a mass ratio of 60: 40. Specifically, the changed parameter values are shown in the table below.

The following describes the test method of each parameter in this application.

**Method for testing the volumetric energy density:**

Putting the lithium-ion battery into a 25 °C thermostat, and leaving the battery to stand for 30 minutes so that the temperature of the lithium-ion battery is constant. Charging the lithium-ion battery at a constant current of 0.5 C under a constant temperature until the voltage reaches 4.4 V, and then charging the battery at a constant voltage of 4.4 V until the current reaches 0.05 C. Subsequently, discharging the battery at a current of 0.5 C until the voltage reaches 3.0 V, and recording the discharge energy.

$$\text{Volumetric energy density} = \text{discharge energy}/(\text{length} \times \text{width} \times \text{thickness}$$
$$\text{of lithium-ion battery}).$$

**Testing the cycle expansion rate:**

Measuring a slab thickness of the formed lithium-ion battery. Putting a lithium-ion battery into a 45 °C±2 °C thermostat, leaving the battery to stand for 2 hours, and then charging the battery at a 1 C rate until the voltage reaches 4.4 V, and charging the battery at a constant voltage of 4.4 V until the current reaches 0.05 C. Subsequently, discharging the battery at a 1 C rate until the voltage reaches 3.0 V, thereby completing one cycle. Repeating the foregoing steps on the lithium-ion battery for 500 cycles, and measuring the slab thickness of the lithium-ion battery. Taking 4 lithium-ion batteries as each group, obtaining an average thickness value of the batteries in the group, and calculating the cycle expansion rate of the lithium-ion battery.

$$\text{Cycle expansion rate} = (500^{\text{th}}\text{-cycle thickness of lithium-ion}$$
$$\text{battery/thickness of chemically formed lithium-ion battery} - 1) \times 100\%.$$

Table 1 shows parameters and evaluation results of embodiments and comparative embodiments.

Table 1

| Serial number | Width of each part of second coating (mm) | Width of first coating (mm) | Width of each part of second coating/ width of first coating | Thickness of first coating ($\mu$m) | Thickness of second coating ($\mu$m) | Mass percent of second binder | Ratio of coating length of second coating to length of first coating | Bonding force between second coating and separator (N/m) | Bonding force between a middle part of first coating and separator (N/m) | Increase rate of volumetric energy density | Decrement of cycle expansion rate |
|---|---|---|---|---|---|---|---|---|---|---|---|
| Comparative Embodiment 1 | 0 | 80 | 0 | 60 | 0 | 0 | 0 | 0 | | 0 | 0 |
| Embodiment 1 | 5 | 80 | 6.3% | 60 | 2 | 60% | 1 | 15 | 5 | 1.2% | 1% |
| Embodiment 2 | 0.8 | 80 | 1% | 60 | 2 | 60% | 1 | 15 | 5 | 1.5% | 0.5% |
| Embodiment 3 | 8 | 80 | 10% | 60 | 2 | 60% | 1 | 15 | 5 | 0.9% | 1.2% |
| Embodiment 4 | 10 | 80 | 12.5% | 60 | 2 | 60% | 1 | 15 | 5 | 0.7% | 1.3% |
| | | | | | | | | | | | |
| Embodiment 5 | 5 | 80 | 6.3% | 30 | 2 | 60% | 1 | 15 | 5 | 1.5% | 0.8% |
| Embodiment 1 | 5 | 80 | 6.3% | 60 | 2 | 60% | 1 | 15 | 5 | 1.2% | 1% |
| Embodiment 6 | 5 | 80 | 6.3% | 100 | 2 | 60% | 1 | 15 | 5 | 0.8% | 1.2% |
| Embodiment 7 | 5 | 80 | 6.3% | 150 | 2 | 60% | 1 | 15 | 5 | 0.5% | 1.5% |
| | | | | | | | | | | | |
| Embodiment 8 | 5 | 80 | 6.3% | 60 | 1 | 60% | 1 | 12 | 5 | 1.3% | 0.8% |

(continued)

| Serial number | Width of each part of second coating (mm) | Width of first coating (mm) | Width of each part of second coating/ width of first coating | Thickness of first coating ($\mu$m) | Thickness of second coating ($\mu$m) | Mass percent of second binder | Ratio of coating length of second coating to length of first coating | Bonding force between second coating and separator (N/m) | Bonding force between a middle part of first coating and separator (N/m) | Increase rate of volumetric energy density | Decrement of cycle expansion rate |
|---|---|---|---|---|---|---|---|---|---|---|---|
| Embodiment 1 | 5 | 80 | 6.3% | 60 | 2 | 60% | 1 | 15 | 5 | 1.2% | 1% |
| Embodiment 9 | 5 | 80 | 6.3% | 60 | 5 | 60% | 1 | 17 | 5 | 1% | 1.3% |
| Embodiment 10 | 5 | 80 | 6.3% | 60 | 7 | 60% | 1 | 17 | 5 | 0.8% | 1.3% |
| | | | | | | | | | | | |
| Embodiment 11 | 5 | 80 | 6.3% | 60 | 2 | 30% | 1 | 12 | 5 | 1.2% | 0.8% |
| Embodiment 1 | 5 | 80 | 6.3% | 60 | 2 | 60% | 1 | 15 | 5 | 1.2% | 1% |
| Embodiment 12 | 5 | 80 | 6.3% | 60 | 2 | 80% | 1 | 17 | 5 | 1.2% | 1.2% |
| Embodiment 13 | 5 | 80 | 6.3% | 60 | 2 | 60% | 0.8 | 15 | 5 | 1.4% | 1% |

As can be seen from comparison between Embodiment 1 and Comparative Embodiment 1, in contrast to the lithium-ion battery with a negative electrode plate containing an undercoat in Comparative Embodiment 1, the volumetric energy density in Embodiment 1 is increased by 1.2% by removing the undercoat. In addition, the high-adhesion coating applied onto the electrode plate can not only reduce the impact caused by the slitter onto the edge thickness of the electrode plate during slitting, but also achieve a good effect of bonding to the separator, and suppress the expansion process of the electrode plate. Therefore, the cycle expansion rate is reduced by 1%. In Embodiments 2 to 4, the width of the applied high-adhesion coating is adjusted so that the electrode plate expansion rate and volumetric energy density can be fine-tuned. In addition, as the width of the second coating (that is, the high-adhesion coating) increases, the increase rate of the volumetric energy density shows a downtrend.

As can be seen from comparison between Embodiments 5 to 7 and Comparative Embodiment 1, for the electrode plates coated with active material layers of different thicknesses, a high-adhesion coating may be applied onto the active material layer to improve the energy density and suppress the electrode plate expansion rate. In addition, as the thickness of the first coating (that is, the active material layer) increases, the increase rate of the volumetric energy density shows a downtrend while the decrease rate of the cycle expansion rate shows an uptrend.

As can be seen from comparison between Embodiments 8, 9, 10 and Comparative Embodiment 1, the thickness of the high-adhesion coating on the active material layer is adjustable. With varying thicknesses of the high-adhesion coating, the energy density can be improved and the electrode plate expansion rate can be suppressed. However, when the thickness of the high-adhesion coating is deficient, the good bonding between the electrode plate and the separator is not ensured, and the effect on controlling the electrode plate expansion rate is slightly limited, but the effect on increasing the energy density is clearer, and the increase rate is up to 1.3%.

As can be seen from comparison between Embodiments 11 to 12 and Comparative Embodiment 1, when the bonding force is adjusted by changing the mass percent of the binder in the high-adhesion coating, the mass percent of the binder exerts no effect on the increase of the volumetric energy density, and the increase rate is up to 1.2% regardless of the mass percent of the binder. However, the varying mass percent of the binder affects the electrode plate expansion rate.

As can be seen from comparison between Embodiment 13 and Comparative Embodiment 1, the high-adhesion coating applied discontinuously not only further increases the volumetric energy density of the battery by up to 1.4%, but also suppresses the electrode plate expansion rate by up to 1% due to still controlled thickness of the whole electrode plate.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

**Claims**

1. An electrode plate, **characterized in that** the electrode plate comprises:

   a current collector;
   a first coating, applied onto the current collector, wherein the first coating comprises an active material, and the first coating comprises a first edge part, a middle part, and a second edge part sequentially in a width direction of the current collector; and
   a second coating, comprising a first part disposed on the first edge part and a second part disposed on the second edge part, wherein
   a first bonding force is exerted by a surface that is of the first part and that is away from the first edge part, a second bonding force is exerted by a surface that is of the second part and that is away from the second edge part, a third bonding force is exerted by a surface that is of the middle part and that is away from the current collector, and both the first bonding force and the second bonding force are greater than the third bonding force.

2. The electrode plate according to claim 1, wherein the first part possesses a width di, the second part possesses a width $d_2$, the first coating possesses a width D, and the widths satisfy $1\% \leq d_1/D \leq 10\%$ and $1\% \leq d_2/D \leq 10\%$.

3. The electrode plate according to claim 1, wherein both the first bonding force and the second bonding force are 2 to 10 times the third bonding force; and/or both the first bonding force and the second bonding force are greater than 5 N/m.

**4.** The electrode plate according to claim 1, wherein a thickness of the second coating is h, a thickness of the middle part is H, and the thicknesses satisfy 0.5 μm < h < 8 μm and 20 μm < H < 200 μm.

**5.** The electrode plate according to claim 1, wherein the first coating comprises a first binder, a mass percent of the first binder is 0.5% to 6%, and the first binder comprises at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

**6.** The electrode plate according to claim 1, wherein the second coating comprises a second binder, a mass percent of the second binder is 30% to 80%, and the second binder comprises at least one of polyvinylidene difluoride, poly(vinylidene fluoride-co-fluorinated olefin), polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

**7.** The electrode plate according to claim 1, wherein, in a length direction of the first coating, the first part and/or the second part are applied discontinuously, a ratio of an aggregate coating length of the first part to a length of the first coating is greater than 80%, and a ratio of an aggregate coating length of the second part to the length of the first coating is greater than 80%.

**8.** The electrode plate according to claim 1, wherein at least a partial region of the current collector is etched.

**9.** The electrode plate according to claim 8, wherein regions of the current collector that correspond to the first edge part and the second edge part are etched, and a roughness of the regions of the current collector that correspond to the first edge part and the second edge part is 2 to 4 times a roughness of a region of the current collector that corresponds to the middle part.

**10.** An electrochemical device, **characterized in that** the electrochemical device comprises:

a positive electrode plate;
a negative electrode plate; and
a separator, disposed between the positive electrode plate and the negative electrode plate,
wherein, the positive electrode plate and/or the negative electrode plate is the electrode plate according to any one of claims 1 to 9.

**11.** An electronic device, **characterized in that** the electronic device comprises the electrochemical device according to claim 10.

FIG. 1

FIG. 2

FIG. 3

FIG. 4

| INTERNATIONAL SEARCH REPORT | International application No. |
|---|---|
| | **PCT/CN2020/112469** |

**A. CLASSIFICATION OF SUBJECT MATTER**

H01M 4/139(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电极, 集流体, 粘结剂, 边缘, 第一, 第二, 含量, 粘附性, 毛刺, 剥离, electrode, current collector, binder, edge, first, second, content, adhesiveness, glitch, exfoliation

**C. DOCUMENTS CONSIDERED TO BE RELEVANT**

| Category* | Citation of document, with indication, where appropriate, of the relevant passages | Relevant to claim No. |
|---|---|---|
| X | CN 111293277 A (SHENZHEN EPT BATTERY CO., LTD.) 16 June 2020 (2020-06-16) description, paragraphs 24-39, and figure 1 | 1-7, 10-11 |
| Y | CN 111293277 A (SHENZHEN EPT BATTERY CO., LTD.) 16 June 2020 (2020-06-16) description, paragraphs 24-39, and figure 1 | 8-9 |
| Y | CN 104137307 A (LG CHEMICAL LTD.) 05 November 2014 (2014-11-05) description, paragraphs 12-18 | 8-9 |
| X | CN 105655540 A (NINGDE CONTEMPORARY AMPEREX TECHNOLOGY CO., LTD.) 08 June 2016 (2016-06-08) description, paragraphs 32-51, and figures 2-12 | 1-7, 10-11 |
| Y | CN 105655540 A (NINGDE CONTEMPORARY AMPEREX TECHNOLOGY CO., LTD.) 08 June 2016 (2016-06-08) description, paragraphs 32-51, and figures 2-12 | 8-9 |
| X | CN 202633452 U (DONGGUAN AMPEREX TECHNOLOGY LIMITED et al.) 26 December 2012 (2012-12-26) description, paragraphs 8-26, and figures 1-8 | 1-7, 10-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2021** | **04 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/112469**

### C.     DOCUMENTS CONSIDERED TO BE RELEVANT

| Category* | Citation of document, with indication, where appropriate, of the relevant passages | Relevant to claim No. |
|---|---|---|
| Y | CN 202633452 U (DONGGUAN AMPEREX TECHNOLOGY LIMITED et al.) 26 December 2012 (2012-12-26) description, paragraphs 8-26, and figures 1-8 | 8-9 |
| X | CN 108417886 A (SHENZHEN QIANHAI YOURONG TECHNOLOGY CO., LTD.) 17 August 2018 (2018-08-17) description, paragraphs 19-55, and figures 1-9 | 1-7, 10-11 |
| Y | CN 108417886 A (SHENZHEN QIANHAI YOURONG TECHNOLOGY CO., LTD.) 17 August 2018 (2018-08-17) description, paragraphs 19-55, and figures 1-9 | 8-9 |
| A | JP 2016115603 A (NIPPON ZEON CO., et al.) 23 June 2016 (2016-06-23) entire document | 1-11 |

Form PCT/ISA/210 (second sheet) (January 2015)

**INTERNATIONAL SEARCH REPORT**
**Information on patent family members**

International application No.

**PCT/CN2020/112469**

| Patent document cited in search report | | | Publication date (day/month/year) | Patent family member(s) | | | Publication date (day/month/year) |
|---|---|---|---|---|---|---|---|
| CN | 111293277 | A | 16 June 2020 | None | | | |
| CN | 104137307 | A | 05 November 2014 | JP | 2015513763 | A | 14 May 2015 |
| | | | | CN | 104137307 | B | 22 September 2017 |
| | | | | EP | 2802031 | B1 | 31 May 2017 |
| | | | | JP | 5860174 | B2 | 16 February 2016 |
| | | | | KR | 101603082 | B1 | 14 March 2016 |
| | | | | WO | 2013157811 | A1 | 24 October 2013 |
| | | | | US | 10026952 | B2 | 17 July 2018 |
| | | | | EP | 2802031 | A1 | 12 November 2014 |
| | | | | KR | 20130116827 | A | 24 October 2013 |
| | | | | US | 2014349171 | A1 | 27 November 2014 |
| CN | 105655540 | A | 08 June 2016 | None | | | |
| CN | 202633452 | U | 26 December 2012 | None | | | |
| CN | 108417886 | A | 17 August 2018 | None | | | |
| JP | 2016115603 | A | 23 June 2016 | JP | 6533053 | B2 | 19 June 2019 |

Form PCT/ISA/210 (patent family annex) (January 2015)